# EUROPEAN PATENT SPECIFICATION

(11) **EP 3 985 268 B1**
(45) Date of publication and mention of the grant of the patent: **07.08.2024**
(21) Application number: 20862279.5
(22) Date of filing: 20.08.2020
(51) Int. Cl.: G06F 1/16, H04M 1/02

(54) **DUAL ROTATING SHAFT MECHANISM, FOLDING ASSEMBLY AND ELECTRONIC DEVICE**
DOPPELDREHWELLENMECHANISMUS, FALTANORDNUNG UND ELEKTRONISCHES GERÄT
MÉCANISME D'ARBRE ROTATIF DOUBLE, ENSEMBLE DE PLIAGE ET DISPOSITIF ÉLECTRONIQUE

(30) Priority: 09.09.2019 CN 201910850037
(43) Date of publication of application: 20.04.2022
(73) Proprietor: GUANGDONG OPPO MOBILE TELECOMMUNICATIONS CORP., LTD., Dongguan, Guangdong 523860 (CN)
(72) Inventor: LI, Jie, Dongguan, Guangdong 523860 (CN); ZHENG, Zekuan, Dongguan, Guangdong 523860 (CN); CHENG, Jiao, Dongguan, Guangdong 523860 (CN)
(74) Representative: Taor, Simon Edward William
(86) International application number: PCT/CN2020/110271
(87) International publication number: WO 2021/047369

(56) References cited:
- CN-A- 102 619 866
- CN-A- 102 777 486
- CN-A- 104 791 370
- JP-A- 2014 062 644
- TW-A- 201 915 639
- US-A1- 2012 046 076
- US-B1- 8 938 856
- US-B2- 10 327 347
- US-B2- 8 660 621

## Description

### TECHNICAL FIELD

This disclosure relates to the technical field of rotating shafts, and in particular to a dual rotating shaft mechanism, a foldable assembly, and an electronic device.

### BACKGROUND

At present, in order to realize a foldable structure of an electronic device, it is necessary to dispose a dual rotating shaft structure in the electronic device. At present, in order to realize synchronous movement of dual rotating shafts, it is necessary to design a complex dual rotating shaft structure, for example, using a complex gear transmission mechanism, which has high requirements for manufacturing accuracy and assembly accuracy of parts, resulting in increased product costs.
The US patent US8938856 B1 discloses a display device. The display device includes a hinge module comprising a pair of hinge shafts arranged side by side, a pair of hinge brackets having one ends coupled to the hinge shafts, respectively, and the other ends in which slide slots are formed, a pair of slide brackets coupled to the slide slots, the slide brackets which are horizontally movable along the slide slots, and a pair of bodies coupled to the slide brackets, respectively, such that the display device may be foldable 0^{~}180 degrees to be folded and unfolded like a book.
The US patent US2012046076 discloses a mobile device, which includes a first housing, a second housing, and a hinge assembly rotatably coupling the first housing to the second housing and enabling movement of the device between an open configuration and a closed configuration. When the device is in the open configuration, the first housing is planar with the second housing. The CN patent CN102777486 A discloses a parallel double-shaft hinge, which enables a first shell and a second shell to be opened, closed and connected mutually, and comprises a bridging element, a first hinge rod, a second hinge rod and a synchronous rotation communication means. The bridging element is assembled with a connecting element, the first hinge rod can support one of the first and second shells relative to the bridging element rotatablely, and the first and second shells can be arranged in a rotatable and parallel state; the second hinge rod can support the other shell of the first and second shells rotatablely, and the synchronous rotation communication means is arranged between the first hinge rod and the second hinge rod and comprises a first connecting cam element, a second connecting cam element and a sliding element.

### SUMMARY

The present invention is defined in the independent claim. A dual rotating shaft mechanism is provided in implementations of the present disclosure, and is applicable to an electronic device including a first main body and a second main body. The dual rotating shaft mechanism includes a rotating shaft base, a first rotating member, a second rotating member, and a linkage member. The first rotating member and the second rotating member are each rotatably connected with the rotating shaft base, the first rotating member is configured to be connected with the first main body, the second rotating member is configured to be connected with the second main body, to drive the first main body and the second main body to unfold or fold relative to each other. The linkage member is slidably connected with the rotating shaft base, the linkage member is further rotatably and slidably connected with the first rotating member and the second rotating member, and the first rotating member and the second rotating member are configured to drive the linkage member to slide relative to the rotating shaft base and synchronously rotate relative to the rotating shaft base through the linkage member.

A foldable assembly is provided in implementations of the present disclosure. The foldable assembly includes a first housing, a second housing, and a dual rotating shaft mechanism. The dual rotating shaft mechanism includes a rotating shaft base, a first rotating member, a second rotating member, and a linkage member. The first rotating member and the second rotating member are each rotatably connected with the rotating shaft base, the first rotating member is configured to be connected with the first housing, the second rotating member is configured to be connected with the second housing, to drive the first housing and the second housing to unfold or fold relative to each other. The linkage member is slidably connected with the rotating shaft base, the linkage member is further rotatably and slidably connected with the first rotating member and the second rotating member, and the first rotating member and the second rotating member are configured to synchronously rotate relative to the rotating shaft base through the linkage member.

An electronic device is provided in implementations of the present disclosure, and the electronic device includes the above foldable assembly.

In the dual rotating shaft mechanism, the foldable assembly, and the electronic device provided in implementations of the present disclosure, the first rotating member is configured to be connected with the first main body, the second rotating member is configured to be connected with the second main body, to drive the first main body and the second main body to unfold or fold relative to each other. The linkage member is slidably connected with the rotating shaft base, the linkage member is further rotatably and slidably connected with the first rotating member and the second rotating member, and the first rotating member and the second rotating member are configured to drive the linkage member to slide relative to the rotating shaft base and synchronously rotate relative to the rotating shaft base through the linkage member. The above dual rotating shaft mechanism avoids adopting a complex gear structure, which facilitates assembly and helps to reduce assembly errors, improve transmission accuracy, and reduce product costs. Rotating twisting forces of the first rotating member and the second rotating member are balanced, such that rotating twisting force requirements for various angles can be met, and user experience can be improved.

### BRIEF DESCRIPTION OF THE DRAWINGS

In order to describe technical solutions of implementations of the present disclosure more clearly, the following will give a brief introduction to the accompanying drawings used for describing the implementations. Apparently, the accompanying drawings hereinafter described are merely some implementations of the present disclosure. Based on these drawings, those of ordinary skill in the art can also obtain other drawings without creative effort.
FIG. 1 is a schematic structural view 1 illustrating a dual rotating shaft mechanism provided in implementations of the present disclosure.
FIG. 2 is a schematic structural view 2 illustrating a dual rotating shaft mechanism provided in implementations of the present disclosure.
FIG. 3 is a schematic structural view 3 illustrating a dual rotating shaft mechanism provided in implementations of the present disclosure.
FIG. 4 is a schematic structural view 4 illustrating a dual rotating shaft mechanism provided in implementations of the present disclosure.
FIG. 5 is a schematic structural view 5 illustrating a dual rotating shaft mechanism provided in implementations of the present disclosure.
FIG. 6 is a schematic structural view 6 illustrating a dual rotating shaft mechanism provided in implementations of the present disclosure.
FIG. 7 is a schematic structural view 7 illustrating a dual rotating shaft mechanism provided in implementations of the present disclosure.
FIG. 8 is a schematic structural view 8 illustrating a dual rotating shaft mechanism provided in implementations of the present disclosure.
FIG. 9 is a schematic structural view 9 illustrating a dual rotating shaft mechanism provided in implementations of the present disclosure.
FIG. 10 is a schematic structural view 10 illustrating a dual rotating shaft mechanism provided in implementations of the present disclosure.
FIG. 11 is a schematic structural view 11 illustrating a dual rotating shaft mechanism provided in implementations of the present disclosure.
FIG. 12 is a schematic structural view 12 illustrating a dual rotating shaft mechanism provided in implementations of the present disclosure.
FIG. 13 is a schematic structural view 13 illustrating a dual rotating shaft mechanism provided in implementations of the present disclosure.
FIG. 14 is a schematic structural view 1 illustrating a foldable assembly provided in implementations of the present disclosure.
FIG. 15 is a schematic structural view 2 illustrating a foldable assembly provided in implementations of the present disclosure.
FIG. 16 is a schematic structural view 3 illustrating a foldable assembly provided in implementations of the present disclosure.
FIG. 17 is a schematic structural view 1 illustrating an electronic device provided in implementations of the present disclosure.
FIG. 18 is a schematic structural view 2 illustrating an electronic device provided in implementations of the present disclosure.

### DETAILED DESCRIPTION

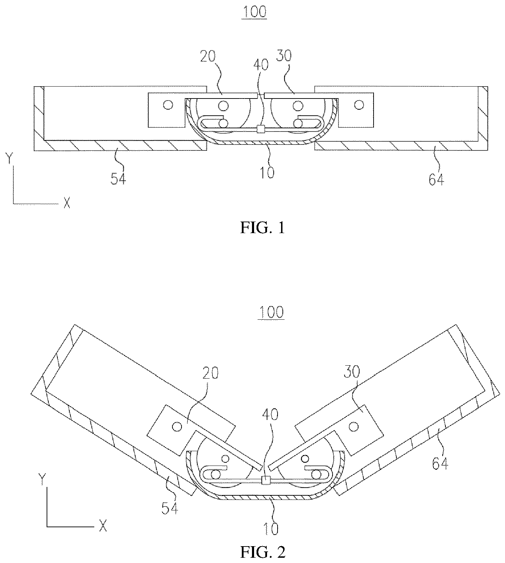

Referring to FIG. 1, FIG. 2, and FIG. 3, a dual rotating shaft mechanism 100 is provided in implementations of the present disclosure. The dual rotating shaft mechanism 100 is applicable to an electronic device 300 which includes a first main body 54 and a second main body 64. The dual rotating shaft mechanism 100 includes a rotating shaft base 10, a first rotating member 20, a second rotating member 30, and a linkage member 40. The first rotating member 20 and the second rotating member 30 are each rotatably connected with the rotating shaft base 10, the first rotating member 20 is configured to be connected with the first main body 54, and the second rotating member 30 is configured to be connected with the second main body 64, to drive the first main body 54 and the second main body 64 to unfold or fold relative to each other. The linkage member 40 is slidably connected with the rotating shaft base 10, the linkage member 40 is further rotatably and slidably connected with the first rotating member 20 and the second rotating member 30, and the first rotating member 20 and the second rotating member 30 are configured to drive the linkage member 40 to slide relative to the rotating shaft base 10 and synchronously rotate relative to the rotating shaft base 10 through the linkage member 40.

In related art, a complex gear transmission mechanism is usually used to realize synchronous rotation of dual shafts, but requirements for manufacturing accuracy and assembly accuracy of gears are very high. Inevitably, when multiple gears are used for transmission, a center distance tolerance between adjacent gears leads to lost motion in transmission of adjacent gears. For a multi-gear mechanism, the greater accumulated lost motion errors, the more difficult it is to achieve a synchronous transmission effect with high accuracy.

The first rotating member 20 is configured to be connected with the first main body 54, and the second rotating member 30 is configured to be connected with the second main body 64, to drive the first main body 54 and the second main body 64 to unfold or fold relative to each other. The linkage member 40 is slidably connected with the rotating shaft base 10, the linkage member 40 is further rotatably and slidably connected with the first rotating member 20 and the second rotating member 30, and the first rotating member 20 and the second rotating member 30 are configured to drive the linkage member 40 to slide relative to the rotating shaft base 10 and synchronously rotate relative to the rotating shaft base 10 through the linkage member 40. The above dual rotating shaft mechanism 100 avoids adopting a complex gear structure, which facilitates assembly and helps to reduce assembly errors, improve transmission accuracy, and reduce product costs. Rotating twisting forces of the first rotating member 20 and the second rotating member 30 are balanced, such that rotating twisting force requirements for various angles can be met, and user experience can be improved.

It can be understood that, the electronic device 300 may be a smart mobile phone, a tablet computer, a smart watch, a notebook computer, or a wearable device, etc. The electronic device 300 has a foldable structure, the first main body 54 is configured to rotate relative to the second main body 64 through the dual rotating shaft mechanism 100, such that the first main body 54 is folded or unfolded relative to the second main body 64 to realize two states of use. The first rotating member 20 and the second rotating member 30 can synchronously rotate relative to the rotating shaft base 10 through the linkage member 40, and the first main body 54 and the second main body 64 can synchronously rotate relative to the rotating shaft base 10, such that rotating twisting forces of the first main body 54 and the second main body 64 are balanced, which can meet the rotating twisting force requirements for various angles and help to improve the user experience.

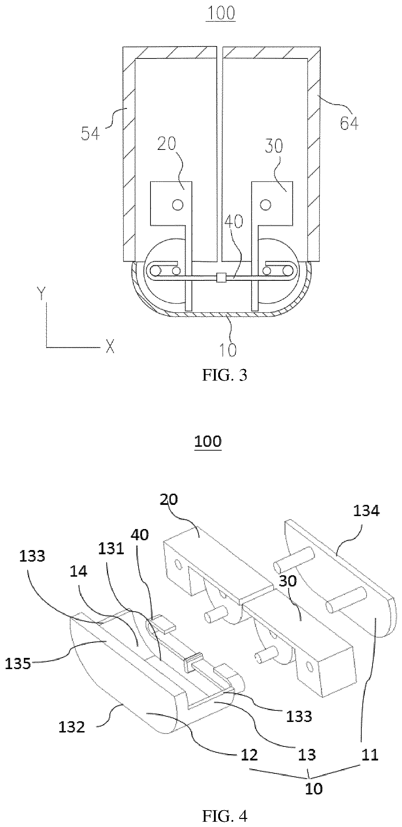

Referring to FIG. 4, in this implementation, the rotating shaft base 10 includes a first side plate 11, a second side plate 12 opposite to the first side plate 11, and a bottom plate 13 fixedly connected with the first side plate 11 and the second side plate 12. The first side plate 11, the second side plate 12, and the bottom plate 13 form a groove 14. The groove 14 is configured to provide mounting space and motion space for the first rotating member 20, the second rotating member 30, and the linkage member 40. The bottom plate 13 is U-shaped and has a first curved edge 131, a second curved edge 132 opposite to the first curved edge 131, and two first side edges 133 opposite to each other. Each of the two first side edges 133 is connected with the first curved edge 131 and the second curve edge 132. The first side plate 11 is connected with the first curved edge 131, the second side plate 12 is connected with the second curved edge 132, and the second side plate 12 and the first side plate 11 are disposed in parallel. The first side plate 11 has a second side edge 134, and the second side plate 12 has a third side edge 135 opposite to the second side edge 134. The second side edge 134 and the third side edge 135 are connected with the two first side edges 133 respectively. The two first side edges 133, the second side edge 134, and the third side edge 135 constitute a peripheral edge of an opening end of the groove 14. The first rotating member 20 and the second rotating member 30 are rotatably connected between the first side plate 11 and the second side plate 12.

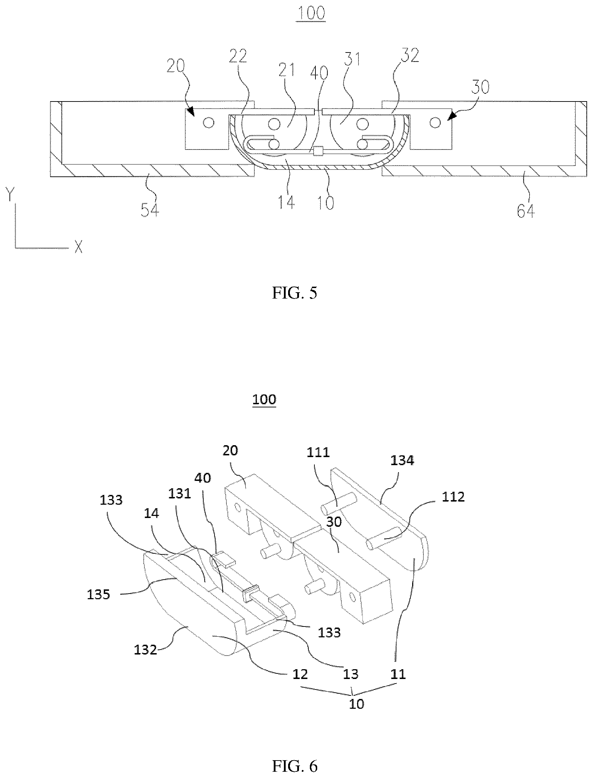

Referring to FIG. 5, the first rotating member 20 has a first rotating shaft 21 and a first connecting arm 22 fixedly connected with the first rotating shaft 21. The second rotating member 30 has a second rotating shaft 31 and a second connecting arm 32 fixedly connected with the second rotating shaft 31. The first rotating shaft 21 is at least partially accommodated in the groove 14, and the second rotating shaft 31 is at least partially accommodated in the groove 14. The first rotating shaft 21 and the second rotating shaft 31 are each rotatably connected with the rotating shaft base 10, and an axis direction of the first rotating shaft 21 and an axis direction of the second rotating shaft 31 are disposed in parallel. The axis direction of the first rotating shaft 21 and the axis direction of the second rotating shaft 31 are perpendicular to the first side plate 11 and the second side plate 12. One end of the first connecting arm 22 is fixedly connected with the first rotating shaft 21, and the other end of the first connecting arm 22 is connected with the first main body 54. One end of the second connecting arm 32 is fixedly connected with the second rotating shaft 31, and the other end of the second connecting arm 32 is fixedly connected with the second main body 64. The first connecting arm 22 and the second connecting arm 32 can synchronously rotate around the first rotating shaft 21 and the second rotating shaft 31 respectively, to drive the first main body 54 and the second main body 64 to synchronously rotate relative to the rotating shaft base 10, such that the first main body 54 and the second main body 64 are unfolded or folded relative to each other.

Referring to FIG. 6, the first rotating member 20 and the second rotating member 30 are rotatably connected with the first side plate 11, and the linkage member 40 is slidably connected with the second side plate 12, where the first side plate 11 has a first convex shaft 111 and a second convex shaft 112 disposed side by side. The first rotating shaft 21 is rotatably connected with the first convex shaft 111, and the second rotating shaft 31 is rotatably connected with the second convex shaft 112. When the first rotating member 20 synchronously moves with the second rotating member 30 through the linkage member 40, the first rotating member 20 and the second rotating member 30 apply rotating twisting forces to the first side plate 11 through the first convex shaft 111 and the second convex shaft 112 respectively, and the first side plate 11 applies damping force to the first rotating member 20 and the second rotating member 30. In addition, the first rotating member 20 and the second rotating member 30 drive the linkage member 40 to slide relative to the second side plate 12, and apply sliding frictional forces to the second side plate 12 through the linkage member 40, the second side plate 12 applies damping force to the linkage member 40, and in turn applies damping force to the first rotating member 20 and the second rotating member 30. In this way, the first rotating member 20 and the second rotating member 30 are subjected to balanced resistance at opposite sides, which helps to realize a smooth rotation process. In other implementations, the first rotating member 20 and the second rotating member 30 are rotatably connected with the first side plate 11, and the linkage member 40 is slidably connected with the first side plate 11.

The linkage member 40 is in a long strip shape. A length direction of the linkage member 40 is parallel to a plane defined by an axis line of the first rotating shaft 21 and an axis line of the second rotating shaft 31. A sliding direction of the linkage member 40 relative to the rotating shaft base 10 is perpendicular to the plane defined by the axis line of the first rotating shaft 21 and the axis line of the second rotating shaft 31.

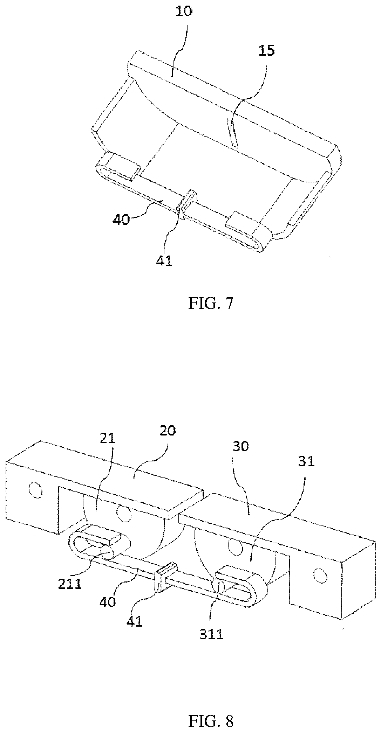

Referring to FIG. 7 and FIG. 8, the linkage member 40 has a sliding portion 41, the rotating shaft base 10 defines a sliding groove 15 in sliding fit with the sliding portion 41, and an extension direction of the sliding groove 15 is perpendicular to the plane defined by the axis line of the first rotating shaft 21 and the axis line of the second rotating shaft 31. The first rotating shaft 21 has a first sliding block 211 deviated from the axis line of the first rotating shaft 21, and the second rotating shaft 31 has a second sliding block 311 deviated from the axis line of the second rotating shaft 31. The linkage member 40 is rotatably and slidably connected with the first sliding block 211 and the second sliding block 311. The first sliding block 211 is spaced apart from the axis line of the first rotating shaft 21, the second sliding block 311 is spaced apart from the axis line of the second rotating shaft 31, and two ends of the linkage member 40 are rotatably and slidably connected with the first sliding block 211 and the second sliding block 311 respectively.

Referring to FIG. 8, when the first sliding block 211 rotates with the first rotating shaft 21, the first sliding block 211 pushes the linkage member 40 to slide relative to the rotating shaft base 10, the first sliding block 211 links the second sliding block 311 through the linkage member 40, the linkage member 40 slides relative to the rotating shaft base 10 and pulls the first sliding block 211 the second sliding block 311 in a direction perpendicular to a connection line between the first rotating shaft 21 and the second rotating shaft 31, such that the second sliding block 311 and the first sliding block 211 synchronously rotate and slide relative to the linkage member 40, which realizes synchronous rotation of the second sliding block 31 and the first sliding block 21 relative to the rotating shaft base 10, where a rotating direction of the first sliding block 211 relative to the linkage member 40 is opposite to a rotating direction of the second sliding block 311 relative to the linkage member 40, such that a rotating direction of the first rotating shaft 21 relative to the rotating shaft base 10 is opposite to a rotating direction of the second rotating shaft 31 relative to the rotating shaft base 10, and the first sliding block 211 and the second sliding block 311 can slide close to or away from each other relative to the linkage member 40.

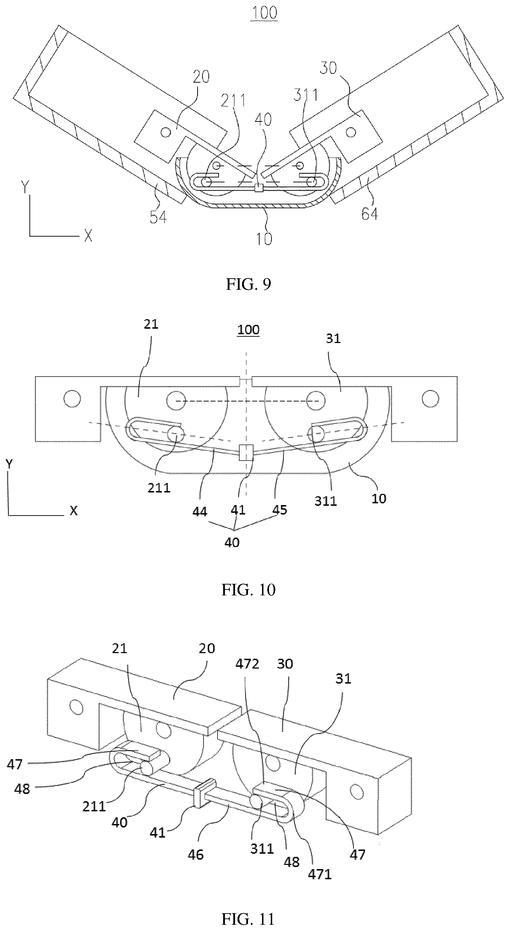

Referring to FIG. 9, furthermore, a direction in which the first sliding block 211 is opposite to the second sliding block 311 is perpendicular to the sliding direction of the linkage member 40 relative to the rotating shaft base 10.

In this implementation, for ease of illustration, a direction of a connection line between centers of the first rotating shaft 21 and the second rotating shaft 31 is defined as a X direction, and a direction perpendicular to the direction of the connection line between centers of the first rotating shaft 21 and the second rotating shaft 31 is defined as a Y direction. The sliding direction of the linkage member 40 relative to the rotating shaft base 10 is perpendicular to the direction of the connection line between centers of the first rotating shaft 21 and the second rotating shaft 31, that is, the sliding direction of the linkage member 40 relative to the rotating shaft base 10 is parallel to the Y direction. The direction in which the first sliding block 211 is opposite to the second sliding block 311 is parallel to the direction of the connection line between centers of the first rotating shaft 21 and the second rotating shaft 31, that is, the direction in which the first sliding block 211 is opposite to the second sliding block 311 is parallel to the X direction, such that the direction in which the first sliding block 211 is opposite to the second sliding block 311 is perpendicular to the sliding direction of the linkage member 40 relative to the rotating shaft base 10. When the dual rotating shaft mechanism 100 is not in use, a direction of static friction force of the linkage member 40 relative to the first sliding block 211 and the second sliding block 311 is perpendicular to a direction of static friction force of the linkage member 40 relative to the rotating shaft, such that the first rotating member 20 and the second rotating member 30 can hover at any rotation angle, which helps to improve the user experience.

The linkage member 40 is in the long strip shape, the two ends of the linkage member 40 are connected with the first sliding block 211 and the second sliding block 311 respectively. The direction in which the first sliding block 211 is opposite to the second sliding block 311 is parallel to the X direction, so when the linkage member 40 slides relative to the rotating shaft base 10, the first sliding block 211 and the second sliding block 311 can keep the length direction of the linkage member 40 parallel to the X direction, which avoids severe friction between the linkage member 40 and the rotating shaft base 10 caused by deflection of the linkage member 40 during sliding, and helps to reduce rotation resistance.

Referring to FIG. 9, furthermore, a sliding direction of the first sliding block 211 relative to the linkage member 40 is opposite to a sliding direction of the second sliding block 311 relative to the linkage member 40.

In this implementation, the linkage member 40 defines a first sliding groove 42 and a second sliding groove 43 at two ends, respectively. The first sliding groove 42 extends parallel to the X direction, the second sliding groove 43 extends parallel to the X direction, and an extension direction of the first sliding groove 42 and an extension direction of the first sliding groove 42 are collinear. The first sliding block 211 is in rotating fit and sliding fit with the first sliding groove 42, the second sliding block 311 is in rotating fit and sliding fit with the second sliding groove 43, such that the direction in which the first sliding block 211 is opposite to the second sliding block 311 is parallel to the X direction, the sliding direction of the first sliding block 211 relative to the linkage member 40 is parallel to the X direction, the sliding direction of the second sliding block 311 relative to the linkage member 40 is parallel to the X direction, and the sliding direction of the first sliding block 211 relative to the linkage member 40 is opposite to the sliding direction of the second sliding block 311 relative to the linkage member 40. When the first rotating member 20 and the second rotating member 30 rotate relative to the rotating shaft base 10, the first sliding block 211 and the second sliding block 311 are displaced in opposite directions relative to the linkage member 40 in the X directions, such that friction force generated by the first sliding block 211 relative to the linkage member 40 and friction force generated by the second sliding block 311 relative to the linkage member 40 are in opposite directions, and at least partially cancel each other out, which realizes balance of the rotating twisting forces of the first rotating member 20 and the second rotating member 30 at various angles during rotation.

Referring to FIG. 10, in another implementation, an angle between the plane defined by the axis line of the first rotating shaft 21 and the axis line of the second rotating shaft 31 and the sliding direction of the first sliding block 211 relative to the linkage member 40 is a first angle, an angle between the plane defined by the axis line of the first rotating shaft 21 and the axis line of the second rotating shaft 31 and the sliding direction of the second sliding block 311 relative to the linkage member 40 is a second angle, and the second angle is equal to the first angle.

In this implementation, the linkage member 40 is substantially V-shaped. The linkage member 40 has a first tilt arm 44, a second tilt arm 45 opposite to the first tilt arm 44, and a sliding portion 41 connected with the first tilt arm 44 and the second tilt arm 45. The first tilt arm 44 is tilted relative to the X direction, and an angle between the plane defined by the axis line of the first rotating shaft 21 and the axis line of the second rotating shaft 31 and the first tilt arm 44 is the first angle. The second tilt arm 45 is tilted relative to the X direction, and an angle between the plane defined by the axis line of the first rotating shaft 21 and the axis line of the second rotating shaft 31 and the second tilt arm 45 is the second angle. The first sliding block 211 is slidably connected with the first tilt arm 44 in a length direction of the first tilt arm 44, the second sliding block 311 is slidably connected with the second tilt arm 45 in a length direction of the second tilt arm 45, such that the sliding direction of the first sliding block 211 relative to the linkage member 40 and the sliding direction of the second sliding block 311 relative to the linkage member 40 form an angle. The sliding portion 41 is slidably connected with the rotating shaft base 10 in the Y direction, to drive the first tilt arm 44 and the second tilt arm 45 to slide relative to the rotating shaft base 10 in the Y direction, which can meet rotation requirements of the first rotating member 20 and the second rotating member 30 at various angles.

The first angle is equal to the second angle, thus a friction force component generated by the first sliding block 211 relative to the linkage member 40 in the X direction and a friction force component generated by the second sliding block 311 relative to the linkage member 40 in the X direction are in opposite directions, and cancel each other out, which realizes the balance of the rotating twisting forces of the first rotating member 20 and the second rotating member 30 at various angles during rotation. In addition, the first sliding block 211 rotates relative to the rotating shaft base 10 to generate a Y-direction displacement, and the Y-direction displacement is equal to a sum of a Y-direction sliding displacement of the first sliding block 211 relative to the linkage member 40 and a Y-direction sliding displacement of the linkage member 40 relative to the rotating shaft base 10. Compared with the previous implementation, the Y-direction sliding displacement of the linkage member 40 relative to the rotating shaft base 10 can be reduced, thereby reducing a sliding space requirement of the linkage member 40, which helps to reduce volume and realize a rotating shaft mechanism with a small size.

Referring to FIG. 9, furthermore, a distance between the first sliding block 211 and the axis line of the first rotating shaft 21 is equal to a distance between the second sliding block 311 and the axis line of the second rotating shaft 31.

In this implementation, the distance between the first sliding block 211 and the axis line of the first rotating shaft 21 is a rotation radius of the first sliding block 211, the distance between the second sliding block 311 and the axis line of the second rotating shaft 31 is the rotation radius of the second sliding block 311, and then the rotation radius of the first sliding block 211 is equal to the rotation radius of the second sliding block 311. In addition, the direction in which the first sliding block 211 is opposite to the second sliding block 311 is perpendicular to the X direction, an angle between a direction of a connection line between the first sliding block 211 and the axis line of the first rotating shaft 21 and the X direction is equal to an angle between a direction of a connection line between the second sliding block 311 and the axis line of the second rotating shaft 31 and the X direction, in other words, the first sliding block 211 and the second sliding block 311 are disposed symmetrically. The first sliding block 211 can synchronously rotate and slide with the second sliding block 311 relative to the linkage member 40 through the linkage member 40, such that a rotation angle of the first sliding block 211 around the axis line of the first rotating shaft 21 is equal to a rotation angle of the second sliding block 311 around the axis line of the second rotating shaft 31, as such the first rotating member 20 and the second rotating member 30 can drive the first main body 54 and the second main body 64 to rotate symmetrically and synchronously. In other implementations, the distance between the first sliding block 211 and the axis line of the first rotating shaft 21 is greater or less than the distance between the second sliding block 311 and the axis line of the second rotating shaft 31, such that the first rotating member 20 and the second rotating member 30 can drive the first main body 54 and the second main body 64 to rotate synchronously but asymmetrically.

Referring to FIG. 11, furthermore, the linkage member 40 has a long arm 46 and two short arms 47 fixed to two ends of the long arm 46. The long arm 46 is slidably connected with the rotating shaft base 10, and each of the two short arms 47 is bent relative to the long arm 46, to define two sliding grooves 48 with the long arm 46. The first sliding block 211 is in rotating fit and sliding fit with one of two sliding grooves 48, and the second sliding block 311 is in rotating fit and sliding fit with the other of the two sliding grooves 48.

In this implementation, the long arm 46 has the sliding portion 41 at a middle position, and the long arm 46 is slidably connected with the rotating shaft base 10 through the sliding portion 41. The sliding portion 41 is located between the first rotating member 20 and the second rotating member 30. The long arm 46 is linear, and a length direction of the long arm 46 is substantially parallel to the X direction. The two short arms 47 are fixed to two ends of the long arm 46 respectively, and are spaced apart from the sliding portion 41. Two sliding grooves 48 are defined between the long arm 46 and the two short arms 47, which makes the linkage member 40 simple in structure and small in volume, and helps to reduce arrangement space of the rotating shaft base 10 occupied by the linkage member 40. In other implementations, the long arm 46 may have other shapes, for example, the long arm 46 is V-shaped or arc-shaped, etc.

The linkage member 40 may be a metal part, and the short arms 47 and the long arm 46 can be formed by a process such as panel beating, which is easy and fast to manufacture, and helps to save costs. The linkage member 40 may also be a non-metal part, for example, the linkage member 40 may be an injection-molded part, and the short arms 47 and the long arm 46 can be formed by an injection molding process.

Referring to FIG. 1 and FIG. 11, each of the short arms 47 has a connecting end 471 and a free end 472 relative to the connecting end 471, and the connecting end 471 is connected with an end of the long arm 46. A gap is defined between the free end 472 and the long arm 46, and an opening of the sliding groove 48 is defined at the gap. The short arms 47 are resilient, and the free end 472 can move relative to the long arm 46. When the first main body 54 is unfolded relative to the second main body 64, free ends 472 of the two short arms 47 resiliently abut against the first sliding block 211 and the second sliding block 311 respectively, to apply damping force to the first rotating member 20 and the second rotating member 30, which can ensure that the dual rotating shaft mechanism 100 is stably kept at an unfolding angle, avoid an orientation change of the first main body 54 and the second main body 64 caused by rotation relative to the rotating shaft base 10 under their own gravity (or other factors), and avoid affecting the user experience.

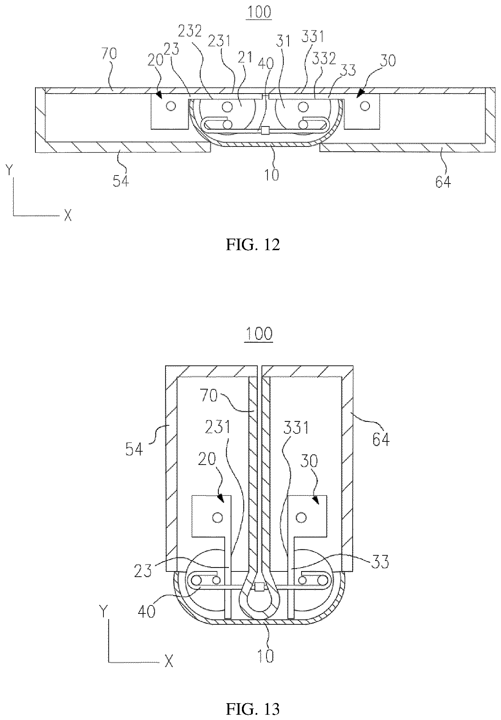

Referring to FIG. 12 and FIG. 13, furthermore, the first rotating member 20 has a first baffle plate 23, and the second rotating member 30 has a second baffle plate 33. When the first main body 54 and the second main body 64 are unfolded, the first baffle plate 23 and the second baffle plate 33 are flush with each other to form a supporting platform to support a flexible display screen 70. When the first main body 54 and the second main body 64 are folded, a gap is defined between the first baffle plate 23 and the second baffle plate 33 to accommodate the flexible display screen 70.

In this implementation, the first baffle plate 23 is fixed to the first rotating shaft 21, and the second baffle plate 33 is fixed to the second rotating shaft 31. The first baffle plate 23 may be integrated with the first rotating shaft 21 or be fixedly connected with the first rotating shaft 21 through screw connection, welding, or snap connection, etc., respectively. Similarly, the second baffle plate 33 and the second rotating shaft 31 may also adopt a similar connection structure. The first baffle plate 23 is configured to be connected with the first main body 54. The second baffle plate 33 is configured to be fixedly connected with the second main body 64. The first baffle plate 23 and the second baffle plate 33 can synchronously rotate around the first rotating shaft 21 and the second rotating shaft 31 respectively, to drive the first main body 54 and the second main body 64 to unfold or fold relative to each other. The first baffle plate 23 has a first bearing surface 231 and a first back surface 232 opposite to the first bearing surface 231. The second baffle plate 33 has a second bearing surface 331 and a second back surface 332 opposite to the second bearing surface 331.

When the first main body 54 and the second main body 64 are unfolded, the first baffle plate 23 and second baffle plate 33 are unfolded, the first bearing surface 231 and the second bearing surface 331 are flush with each other to form a smooth bearing platform. The first bearing surface 231 and the second bearing surface 331 can be provided with a bearing component to support the flexible display screen 70, which enables the flexible display screen 70 to be smoothly unfolded. In addition, the first baffle plate 23 abuts against the rotating shaft base 10 through the first back surface 232, and the second baffle plate 33 abuts against the rotating shaft base 10 through the second back surface 332, which can limit the first baffle plate 23 and the second baffle plate 33. A gap may be defined between the first baffle plate 23 and the second baffle plate 33, or the first baffle plate 23 and the second baffle plate 33 may be seamlessly connected so that the first bearing surface 231 and the second bearing surface 331 form a continuous bearing flat surface, which is not limited here, and can be set according to own needs.

When the first main body 54 and the second main body 64 are folded, the first baffle plate 23 is close to the second baffle plate 33, and the first bearing surface 231 is close to the second bearing surface 331. A gap is defined between the first bearing surface 231 and the second bearing surface 331, the flexible display screen 70 is accommodated in the gap, and a curved part of the flexible display screen 70 is at least partially accommodated in the rotating shaft base 10, such that the first baffle plate 23 and the second baffle plate 33 can protect the flexible display screen 70.

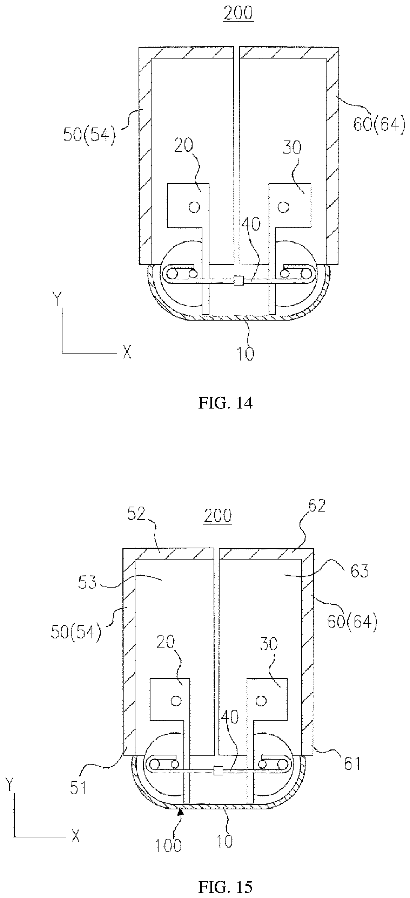

Referring to FIG. 14, a foldable assembly 200 is provided in implementations of the present disclosure. The foldable assembly 200 includes a first housing 50, a second housing 60 and a dual rotating shaft mechanism 100. The dual rotating shaft mechanism 100 includes a rotating shaft base 10, a first rotating member 20, a second rotating member 30, and a linkage member 40. The first rotating member 20 and the second rotating member 30 are each rotatably connected with the rotating shaft base 10, and the first rotating member 20 is configured to be connected with the first housing 50, the second rotating member 30 is configured to be connected with the second housing 60, to drive the first housing 50 and the second housing 60 to unfold or fold relative to each other. The linkage member 40 is slidably connected with the rotating shaft base 10, the linkage member 40 is further rotatably and slidably connected with the first rotating member 20 and the second rotating member 30, and the first rotating member 20 and the second rotating member 30 are configured to synchronously rotate relative to the rotating shaft base 10 through the linkage member 40.

Reference of the dual rotating shaft mechanism 100 can be made to the above illustration, which will not be repeated here. The first housing 50 constitutes the first main body 54, and the second housing 60 constitutes the second main body 64.

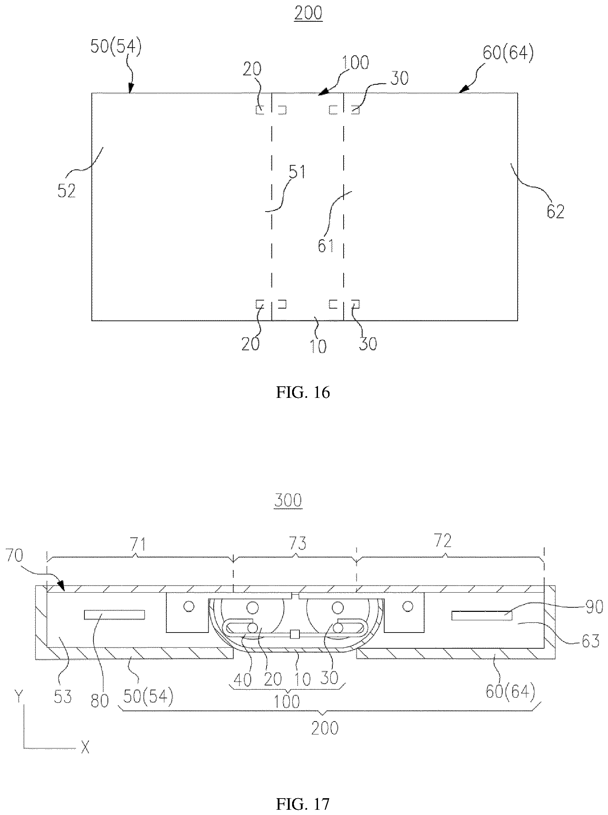

Referring to FIG. 15 and FIG. 16, the first housing 50 is substantially rectangular. The first housing 50 has a first connecting end 51 and a first free end 52 opposite to the first connecting end 51. The first connecting end 51 is located at a side of the first housing 50 close to the rotating shaft base 10, and the first free end 52 is located at a side of the first housing 50 away from the rotating shaft base 10. The second housing 60 is substantially rectangular. The second housing 60 has a second connecting end 61 and a second free end 62 opposite to the second connecting end 61. The second connecting end 61 is located at a side of the second housing 60 close to the rotating shaft base 10, and the second free end 62 is located at a side of the second housing 60 away from the rotating shaft base 10.

The dual rotating shaft mechanism 100 may include two first rotating members 20 opposite to each other, and two second rotating members 30 opposite to each other. Each of the two first rotating members 20 is connected with the first housing 50 and the rotating shaft base 10, and each of the two second rotating members 30 is connected with the second housing 60 and the rotating shaft base 10. The rotating shaft base 10 is in the long strip shape. The two first rotating members 20 are rotatably connected with two ends of the rotating shaft base 10 respectively, and ends of the two first rotating members 20 away from the rotating shaft base 10 are connected with the first connecting end 51. The two second rotating members 30 are rotatably connected with the two ends of the rotating shaft base 10 respectively, and the ends of the two first rotating members 20 away from the rotating shaft base 10 are connected with the second connecting end 61. In other implementations, the number of each of the first rotating member 20 and the second rotating member 30 may be greater than 2.

The first housing 50 and the second housing 60 are configured to be fixedly connected with and to support the flexible display screen 70, to drive the flexible display screen 70 to fold or unfold, thereby realizing two states of use. The first housing 50 defines a first accommodating space 53 between the first connecting end 51 and the first free end 52. The second housing 60 defines a second accommodating space 63 between the second connecting end 61 and the second free end 62. The first accommodating space 53 and the second accommodating space 63 can be configured to accommodate a functional device. The functional device may be a circuit board, a camera module, a speaker module, or a receiver module, etc.

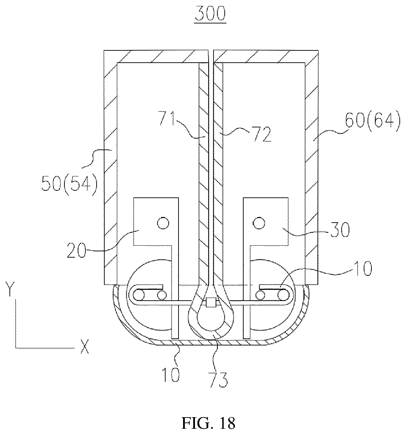

Referring to FIG. 17 and FIG. 18, an electronic device 300 is provided in implementations of the present disclosure. The electronic device 300 includes the above foldable assembly 200. It can be understood that, the electronic device 300 may be a smart mobile phone, a smart watch, a tablet computer, a notebook computer, or a wearable device, etc.

The electronic device 300 includes the flexible display screen 70 which includes a first display portion 71, a second display portion 72 opposite to the first display portion 71, and a bendable display portion 73 fixedly connected with the first display portion 71 and the second display portion 72. The first display portion 71 is fixed to the first housing 50, the second display portion 72 is fixed to the second housing 60, and the first housing 50 is configured to rotate relative to the second housing 60 through the dual rotating shaft mechanism 100, to drive the bendable display portion 73 to bend.

The first display portion 71 is fixed between the first connecting end 51 and the first free end 52, and the first display portion 71 is configured to cover the first accommodating space 53 of the first housing 50. The second display portion 72 is fixed between the second connecting end 61 and the second free end 62, and the second display portion 72 is configured to cover the second accommodating space 63 of the second housing 60. The bendable display portion 73 is fixed between the first display portion 71 and the second display portion 72, and the bendable display portion 73 is disposed opposite to the rotating shaft base 10. The first housing 50 can synchronously rotate with the second housing 60 relative to the rotating shaft base 10 through the dual rotating shaft base 10, to drive the first display portion 71 to unfold or fold relative to the second display portion 72 and drive the bendable display portion 73 to unfold or bend. The dual rotating shaft mechanism 100 ensures that rotational movements of both sides of the flexible display 70 are synchronous, so as to ensure that the bendable display portion 73 of the flexible screen is subjected to uniform force, avoiding an influence on the service life by local stress concentration on the bendable display portion 73.

The electronic device 300 also includes a first functional component 80 and a second functional component 90. The first functional component 80 is fixed in the first accommodating space 53. The second functional component 90 is fixed in the accommodating space. The first functional component 80 may include a circuit board, a camera module, a speaker module, or a receiver module, etc. The second functional component 90 may include a circuit board, a camera module, a speaker module, or a receiver module, etc.

In the dual rotating shaft mechanism, the foldable assembly, and the electronic device provided in implementations of the present disclosure, the first rotating member is configured to be connected with the first main body, the second rotating member is configured to be connected with the second main body, to drive the first main body and the second main body to unfold or fold relative to each other. The linkage member is slidably connected with the rotating shaft base, the linkage member is further rotatably and slidably connected with the first rotating member and the second rotating member, and the first rotating member and the second rotating member are configured to drive the linkage member to slide relative to the rotating shaft base and synchronously rotate relative to the rotating shaft base through the linkage member. The above dual rotating shaft mechanism avoids adopting a complex gear structure, which facilitates assembly and helps to reduce assembly errors, improve transmission accuracy, and reduce product costs. The rotating twisting forces of the first rotating member and the second rotating member are balanced, such that the rotating twisting force requirements for various angles can be met, and the user experience can be improved.

## Claims

1. A foldable assembly (200) comprising a first main body (54), a second main body (64), and a dual rotating shaft mechanism (100), wherein the dual rotating shaft mechanism comprises a rotating shaft base (10), a first rotating member (20), a second rotating member (30), and a linkage member (40),
the first rotating member and the second rotating member are each rotatably connected with the rotating shaft base, the first rotating member is configured to be connected with the first main body, and the second rotating member is configured to be connected with the second main body, to drive the first main body and the second main body to unfold or fold relative to each other; and
the linkage member is slidably connected with the rotating shaft base, and the linkage member is further rotatably and slidably connected with the first rotating member and the second rotating member, the first rotating member and the second rotating member are configured to drive the linkage member to slide relative to the rotating shaft base and synchronously rotate relative to the rotating shaft base through the linkage member; wherein,
the first rotating member has a first rotating shaft (21), the second rotating member has a second rotating shaft (31) parallel to the first rotating shaft, and a sliding direction of the linkage member relative to the rotating shaft base is perpendicular to a plane defined by an axis line of the first rotating shaft and an axis line of the second rotating shaft; and
the first rotating shaft has a first sliding block (211) deviated from the axis line of the first rotating shaft, the second rotating shaft has a second sliding block (311) deviated from the axis line of the second rotating shaft, and the linkage member is rotatably and slidably connected with the first sliding block and the second sliding block;
**characterized in that**
the linkage member has a long arm (46) and two short arms (47) fixed to two ends of the long arm;
the long arm is slidably connected with the rotating shaft base, and each of the two short arms is bent relative to the long arm, to define two sliding grooves (48) with the long arm; and
the first sliding block is in rotating fit and sliding fit with one of the two sliding grooves (48), and the second sliding block is in rotating fit and sliding fit with the other one of the two sliding grooves.

2. The foldable assembly (200) of claim 1, wherein a direction in which the first sliding block is opposite to the second sliding block is perpendicular to the sliding direction of the linkage member relative to the rotating shaft base; a distance between the first sliding block and the axis line of the first rotating shaft is equal to a distance between the second sliding block and the axis line of the second rotating shaft.

3. The foldable assembly (200) of claim 2, wherein a sliding direction of the first sliding block relative to the linkage member is opposite to a sliding direction of the second sliding block relative to the linkage member.

4. The foldable assembly (200) of claim 2, wherein a first angle is defined between the plane defined by the axis line of the first rotating shaft and the axis line of the second rotating shaft and the sliding direction of the first sliding block relative to the linkage member, a second angle is defined between the plane defined by the axis line of the first rotating shaft and the axis line of the second rotating shaft and the sliding direction of the second sliding block relative to the linkage member, and the second angle is equal to the first angle.

5. The foldable assembly (200) of claim 1, wherein
each of the two short arms has a connecting end (471) and a free end (472) opposite to the connecting end, the connecting end being connected with an end of the long arm; and
when the first main body is unfolded relative to the second main body, free ends of the two short arms resiliently abut against the first sliding block and the second sliding block respectively, to apply damping force to the first rotating member and the second rotating member.

6. The foldable assembly (200) of any of claims 1 to 5, wherein the rotating shaft base comprises a first side plate (11) and a second side plate (12) opposite to the first side plate, the first rotating member and the second rotating member are each rotatably connected with the first side plate, and the linkage member is slidably connected with the second side plate.

7. The foldable assembly (200) of any of claims 1 to 5, wherein
the first rotating member has a first baffle plate (23), and the second rotating member has a second baffle plate (33);
when the first main body and the second main body are unfolded, the first baffle plate and the second baffle plate are flush with each other to form a supporting platform to support a flexible display screen (70); and
when the first main body and the second main body are folded, a gap is defined between the first baffle plate and the second baffle plate to partially accommodate the flexible display screen.

8. The foldable assembly (200) of claim 1, further comprising:
a first housing (50); and
a second housing (60); wherein,
the first housing (50) constitutes the first main body (54), and the second housing (60) constitutes the second main body (64).

9. The foldable assembly (200) of claim 8, wherein
the first housing has a first connecting end (51) and a first free end (52) opposite to the first connecting end; wherein the first connecting end is located at a side of the first housing adjacent to the rotating shaft base, and the first free end is located at a side of the first housing away from the rotating shaft base; and
the second housing has a second connecting end (61) and a second free end (62) opposite to the second connecting end; wherein the second connecting end is located at a side of the second housing adjacent to the rotating shaft base, and the second free end is located at a side of the second housing away from the rotating shaft base.

10. The foldable assembly (200) of claim 8, wherein
the dual rotating shaft mechanism comprises two first rotating members opposite to each other, and two second rotating members opposite to each other; wherein
the two first rotating members are rotatably connected with two ends of the rotating shaft base respectively, and ends of the two first rotating members away from the rotating shaft base are connected with the first connecting end; and
the two second rotating members are rotatably connected with the two ends of the rotating shaft base respectively, and the ends of the two second rotating members away from the rotating shaft base are connected with the second connecting end.

11. An electronic device (300), comprising the foldable assembly (200) of any of claims 1-10.

12. The electronic device (300) of claim 11, further comprising a flexible display screen (70), wherein
the flexible display screen comprises a first display portion (71), a second display portion (72) opposite to the first display portion, and a bendable display portion (73) fixedly connected with the first display portion and the second display portion; and
the first display portion is fixed to a first housing, the second display portion is fixed to a second housing, the first housing is configured to rotate relative to the second housing through the dual rotating shaft mechanism, to drive the bendable display portion to bend.

13. The electronic device (300) of claim 12, wherein
the first display portion is fixed between a first connecting end and a first free end, and the first display portion covers a first accommodating space (53) of the first housing;
the second display portion is fixed between a second connecting end and a second free end, and the second display portion covers a second accommodating space (63) of the second housing;
the bendable display portion is fixed between the first display portion and the second display portion, and the bendable display portion is disposed opposite to the rotating shaft base; and
the first housing and the second housing are configured to synchronously rotate relative to the rotating shaft base through the dual rotating shaft base, to drive the first display portion to unfold or fold relative to the second display portion, and in turn drive the bendable display portion to unfold or bend.

## Patentansprüche

1. Klappbare Anordnung (200), die einen ersten Hauptkörper (54), einen zweiten Hauptkörper (64) und einen Doppeldrehwellenmechanismus (100) umfasst, wobei der Doppeldrehwellenmechanismus eine Drehwellenbasis (10), ein erstes Drehelement (20), ein zweites Drehelement (30) und ein Kopplungselement (40) umfasst, wobei
das erste Drehelement und das zweite Drehelement jeweils mit der Drehwellenbasis drehbar verbunden sind, das erste Drehelement konfiguriert ist, mit dem ersten Hauptkörper verbunden zu sein und das zweite Drehelement konfiguriert ist, mit dem zweiten Hauptkörper verbunden zu sein, um den ersten Hauptkörper und den zweiten Hauptkörper anzutreiben, in Bezug aufeinander auszuklappen oder einzuklappen; und
das Kopplungselement mit der Drehwellenbasis gleitend verbunden ist und das Kopplungselement ferner mit dem ersten Drehelement und dem zweiten Drehelement drehbar und gleitend verbunden ist, wobei das erste Drehelement und das zweite Drehelement konfiguriert sind, das Kopplungselement anzutreiben, in Bezug auf die Drehwellenbasis zu gleiten und sich in Bezug auf die Drehwellenbasis durch das Kopplungselement synchron drehen; wobei
das erste Drehelement eine erste Drehwelle (21) besitzt, das zweite Drehelement eine zweite Drehwelle (31) parallel zur ersten Drehwelle besitzt und eine Gleitrichtung des Kopplungselements in Bezug auf die Drehwellenbasis senkrecht zu einer Ebene ist, die durch eine Achsenlinie der ersten Drehwelle und eine Achsenlinie der zweiten Drehwelle definiert ist; und die erste Drehwelle einen ersten Gleitblock (211) besitzt, der von der Achsenlinie der ersten Drehwelle abweicht, die zweite Drehwelle einen zweiten Gleitblock (311) besitzt, der von der Achsenlinie der zweiten Drehwelle abweicht, und das Kopplungselement mit dem ersten Gleitblock und dem zweiten Gleitblock drehbar und gleitend verbunden ist;
**dadurch gekennzeichnet, dass**
das Kopplungselement einen langen Zweig (46) und zwei kurze Zweige (47), die an zwei Enden des langen Zweigs befestigt sind, besitzt;
der lange Zweig mit der Drehwellenbasis gleitend verbunden ist und jeder der zwei kurzen Zweige in Bezug auf den langen Zweig gebogen ist, um mit dem langen Zweig zwei Gleitnuten (48) zu definieren; und
der erste Gleitblock in Drehpassung und Gleitpassung mit einer der zwei Gleitnuten (48) ist und der zweite Gleitblock in Drehpassung und Gleitpassung mit der weiteren der zwei Gleitnuten ist.

2. Klappbare Anordnung (200) nach Anspruch 1, wobei eine Richtung, in der der erste Gleitblock dem zweiten Gleitblock entgegengesetzt ist, senkrecht zur Gleitrichtung des Kopplungselements in Bezug auf die Drehwellenbasis ist und eine Entfernung zwischen dem ersten Gleitblock und der Achsenlinie der ersten Drehwelle gleich einer Entfernung zwischen dem zweiten Gleitblock und der Achsenlinie der zweiten Drehwelle ist.

3. Klappbare Anordnung (200) nach Anspruch 2, wobei eine Gleitrichtung des ersten Gleitblocks in Bezug auf das Kopplungselement zu einer Gleitrichtung des zweiten Gleitblocks in Bezug auf das Kopplungselement entgegengesetzt ist.

4. Klappbare Anordnung (200) nach Anspruch 2, wobei ein erster Winkel zwischen der Ebene, die durch die Achsenlinie der ersten Drehwelle und die Achsenlinie der zweiten Drehwelle definiert ist, und der Gleitrichtung des ersten Gleitblocks in Bezug auf das Kopplungselement definiert ist, ein zweiter Winkel, zwischen der Ebene, die durch die Achsenlinie der ersten Drehwelle und die Achsenlinie der zweiten Drehwelle definiert ist, und der Gleitrichtung des zweiten Gleitblocks in Bezug auf das Kopplungselement definiert ist, und der zweite Winkel gleich dem ersten Winkel ist.

5. Klappbare Anordnung (200) nach Anspruch 1, wobei jeder der zwei kurzen Zweige ein Verbindungsende (471) und ein freies Ende (472), das dem Verbindungsende entgegengesetzt ist, besitzt, wobei das Verbindungsende mit einem Ende des langen Zweigs verbunden ist; und dann, wenn der erste Hauptkörper in Bezug auf den zweiten Hauptkörper ausgeklappt ist, freie Enden der zwei kurzen Zweige an dem ersten Gleitblock bzw. dem zweiten Gleitblock elastisch anliegen, um dem ersten Drehelement und dem zweiten Drehelement eine Dämpfungskraft zu vermitteln.

6. Klappbare Anordnung (200) nach einem der Ansprüche 1 bis 5, wobei die Drehwellenbasis eine erste Seitenplatte (11) und eine zweite Seitenplatte (12), die der ersten Seitenplatte entgegengesetzt ist, umfasst, das erste Drehelement und das zweite Drehelement jeweils mit der ersten Seitenplatte drehbar verbunden sind und das Kopplungselement mit der zweiten Seitenplatte gleitend verbunden ist.

7. Klappbare Anordnung (200) nach einem der Ansprüche 1 bis 5, wobei
das erste Drehelement eine erste Ablenkplatte (23) besitzt und das zweite Drehelement eine zweite Ablenkplatte (33) besitzt;
dann, wenn der erste Hauptkörper und der zweite Hauptkörper ausgeklappt sind, die erste Ablenkplatte und die zweite Ablenkplatte miteinander bündig sind, um eine Trägerplattform zu bilden, um einen flexiblen Anzeigebildschirm (70) zu tragen; und
dann, wenn der erste Hauptkörper und der zweite Hauptkörper eingeklappt sind, eine Lücke zwischen der ersten Ablenkplatte und der zweiten Ablenkplatte definiert ist, um den flexiblen Anzeigebildschirm teilweise aufzunehmen.

8. Klappbare Anordnung (200) nach Anspruch 1, die ferner Folgendes umfasst:
ein erstes Gehäuse (50) und
ein zweites Gehäuse (60); wobei das erste Gehäuse (50) den ersten Hauptkörper (54) bildet und das zweite Gehäuse (60) den zweiten Hauptkörper (64) bildet.

9. Klappbare Anordnung (200) nach Anspruch 8, wobei
das erste Gehäuse ein erstes Verbindungsende (51) und ein erstes freies Ende (52), das dem ersten Verbindungsende entgegengesetzt ist, besitzt; wobei das erste Verbindungsende auf einer Seite des ersten Gehäuses angeordnet ist, die zur Drehwellenbasis benachbart ist, und das erste freie Ende auf einer Seite des ersten Gehäuses angeordnet ist, die von der Drehwellenbasis entfernt ist; und
das zweite Gehäuse ein zweites Verbindungsende (61) und ein zweites freies Ende (62), das dem zweiten Verbindungsende entgegengesetzt ist, besitzt; wobei das zweite Verbindungsende auf einer Seite des zweiten Gehäuses angeordnet ist, die zur Drehwellenbasis benachbart ist, und das zweite freie Ende auf einer Seite des zweiten Gehäuses angeordnet ist, die von der Drehwellenbasis entfernt ist.

10. Klappbare Anordnung (200) nach Anspruch 8, wobei der Doppeldrehwellenmechanismus zwei erste Drehelemente, die einander entgegengesetzt sind, und zwei zweite Drehelemente, die einander entgegengesetzt sind, umfasst;
die zwei ersten Drehelemente mit zwei Enden der Drehwellenbasis jeweils drehbar verbunden sind und Enden der zwei ersten Drehelemente, die von der Drehwellenbasis entfernt sind, mit dem ersten Verbindungsende verbunden sind; und
die zwei zweiten Drehelemente mit den zwei Enden der Drehwellenbasis jeweils drehbar verbunden sind und die Enden der zwei zweiten Drehelemente, die von der Drehwellenbasis entfernt sind, mit dem zweiten Verbindungsende verbunden sind.

11. Elektronische Vorrichtung (300), die die klappbare Anordnung (200) nach einem der Ansprüche 1-10 umfasst.

12. Elektronische Vorrichtung (300) nach Anspruch 11, die ferner einen flexiblen Anzeigebildschirm (70) umfasst, wobei
der flexible Anzeigebildschirm einen ersten Anzeigeabschnitt (71), einen zweiten Anzeigeabschnitt (72), der dem ersten Anzeigeabschnitt entgegengesetzt ist, und einen biegsamen Anzeigeabschnitt (73), der mit dem ersten Anzeigeabschnitt und dem zweiten Anzeigeabschnitt fest verbunden ist, umfasst; und
der erste Anzeigeabschnitt an einem ersten Gehäuse befestigt ist, der zweite Anzeigeabschnitt an einem zweiten Gehäuse befestigt ist und das erste Gehäuse konfiguriert ist, sich in Bezug auf das zweite Gehäuse durch den Doppeldrehwellenmechanismus zu drehen, um den biegsamen Anzeigeabschnitt anzutreiben, sich zu biegen.

13. Elektronische Vorrichtung (300) nach Anspruch 12, wobei
der erste Anzeigeabschnitt zwischen einem ersten Verbindungsende und einem ersten freien Ende befestigt ist und der erste Anzeigeabschnitt einen ersten Aufnahmeraum (53) des ersten Gehäuses abdeckt;
der zweite Anzeigeabschnitt zwischen einem zweiten Verbindungsende und einem zweiten freien Ende befestigt ist und der zweite Anzeigeabschnitt einen zweiten Aufnahmeraum (63) des zweiten Gehäuses abdeckt;
der biegsame Anzeigeabschnitt zwischen dem ersten Anzeigeabschnitt und dem zweiten Anzeigeabschnitt befestigt ist und der biegsame Anzeigeabschnitt gegenüber der Drehwellenbasis angeordnet ist und
das erste Gehäuse und das zweite Gehäuse konfiguriert sind, sich in Bezug auf die Drehwellenbasis durch die Doppeldrehwellenbasis synchron zu drehen, um den ersten Anzeigeabschnitt anzutreiben, sich in Bezug auf den zweiten Anzeigeabschnitt auszuklappen oder einzuklappen, und wiederum den biegsamen Anzeigeabschnitt anzutreiben, sich auszuklappen oder zu biegen.

## Revendications

1. Ensemble pliable (200), comprenant un premier corps principal (54), un deuxième corps principal (64), et un mécanisme (100) à deux arbres rotatifs, le mécanisme à deux arbres rotatifs comprenant une base (10) d'arbres rotatifs, un premier élément rotatif (20), un deuxième élément rotatif (30), et un élément d'articulation (40),
le premier élément rotatif et le deuxième élément rotatif étant chacun liés rotatifs à la base d'arbres rotatifs, le premier élément rotatif étant configuré pour être lié au premier corps principal, et le deuxième élément rotatif étant configuré pour être lié au deuxième corps principal, afin d'amener le premier corps principal et le deuxième corps principal à se déplier ou à se plier l'un par rapport à l'autre ; et
l'élément d'articulation étant lié coulissant à la base d'arbres rotatifs, et l'élément d'articulation étant en outre lié rotatif et coulissant au premier élément rotatif et au deuxième élément rotatif, le premier élément rotatif et le deuxième élément rotatif étant configurés pour amener l'élément d'articulation à coulisser par rapport à la base d'arbres rotatifs et à effectuer une rotation synchrone par rapport à la base d'arbres rotatifs au moyen de l'élément d'articulation ;
le premier élément rotatif étant pourvu d'un premier arbre rotatif (21), le deuxième élément rotatif étant pourvu d'un deuxième arbre rotatif (31) parallèle au premier arbre rotatif, et une direction de coulissement de l'élément d'articulation par rapport à la base d'arbres rotatifs étant perpendiculaire à un plan défini par une ligne d'axe du premier arbre rotatif et une ligne d'axe du deuxième arbre rotatif ; et
le premier arbre rotatif étant pourvu d'un premier coulisseau (211) déporté par rapport à la ligne d'axe du premier arbre rotatif, le deuxième arbre rotatif étant pourvu d'un deuxième coulisseau (311) déporté par rapport à la ligne d'axe du deuxième arbre rotatif, et l'élément d'articulation étant lié rotatif et coulissant au premier coulisseau et au deuxième coulisseau ;
**caractérisé en ce que**
l'élément d'articulation est pourvu d'un bras long (46) et de deux bras courts (47) fixés à deux extrémités du bras long ;
le bras long est lié coulissant à la base d'arbres rotatifs, et chacun des deux bras courts est recourbé par rapport au bras long, afin de définir deux rainures de coulissement (48) avec le bras long ; et
le premier coulisseau est en ajustement rotatif et en ajustement coulissant avec l'une des deux rainures de coulissement (48), et le deuxième coulisseau est en ajustement rotatif et en ajustement coulissant avec l'autre des deux rainures de coulissement.

2. Ensemble pliable (200) selon la revendication 1, une direction dans laquelle le premier coulisseau est opposé au deuxième coulisseau étant perpendiculaire à la direction de coulissement de l'élément d'articulation par rapport à la base d'arbres rotatifs ; une distance entre le premier coulisseau et la ligne d'axe du premier arbre rotatif étant égale à une distance entre le deuxième coulisseau et la ligne d'axe du deuxième arbre rotatif.

3. Ensemble pliable (200) selon la revendication 2, une direction de coulissement du premier coulisseau par rapport à l'élément d'articulation est opposée à une direction de coulissement du deuxième coulisseau par rapport à l'élément d'articulation.

4. Ensemble pliable (200) selon la revendication 2, un premier angle étant défini entre le plan défini par la ligne d'axe du premier arbre rotatif et la ligne d'axe du deuxième arbre rotatif et la direction de coulissement du premier coulisseau par rapport à l'élément d'articulation, un deuxième angle étant défini entre le plan défini par la ligne d'axe du premier arbre rotatif et la ligne d'axe du deuxième arbre rotatif et la direction de coulissement du deuxième coulisseau par rapport à l'élément d'articulation, et le deuxième angle étant égal au premier angle.

5. Ensemble pliable (200) selon la revendication 1,
chacun des deux bras courts étant pourvu d'une extrémité de liaison (471) et d'une extrémité libre (472) opposée à l'extrémité de liaison, l'extrémité de liaison étant liée à une extrémité du bras long ; et
lorsque le premier corps principal se déplie par rapport au deuxième corps principal, les extrémités libres des deux bras courts viennent élastiquement buter respectivement contre le premier coulisseau et contre le deuxième coulisseau, afin d'appliquer une force d'amortissement au premier élément rotatif et au deuxième élément rotatif.

6. Ensemble pliable (200) selon l'une quelconque des revendications 1 à 5, la base d'arbres rotatifs comprenant une première plaque latérale (11) et une deuxième plaque latérale (12) opposée à la première plaque latérale, le premier élément rotatif et le deuxième élément rotatif étant chacun liés rotatifs à la première plaque latérale, et l'élément d'articulation étant lié coulissant à la deuxième plaque latérale.

7. Ensemble pliable (200) selon l'une quelconque des revendications 1 à 5,
le premier élément rotatif étant pourvu d'une première plaque déflectrice (23), et le deuxième élément rotatif étant pourvu d'une deuxième plaque déflectrice (33) ;
lorsque le premier corps principal et le deuxième corps principal sont dépliés, la première plaque déflectrice et la deuxième plaque déflectrice étant affleurantes l'une avec l'autre afin de former une plateforme de support pour supporter un écran d'affichage souple (70) ; et
lorsque le premier corps principal et le deuxième corps principal sont pliés, un espace étant défini entre la première plaque déflectrice et la deuxième plaque déflectrice afin d'accueillir au moins partiellement l'écran d'affichage souple.

8. Ensemble pliable (200) selon la revendication 1, comprenant en outre :
une première coque (50) ; et
une deuxième coque (60) ;
la première coque (50) constituant le premier corps principal (54), et la deuxième coque (60) constituant le deuxième corps principal (64).

9. Ensemble pliable (200) selon la revendication 8,
la première coque étant pourvue d'une première extrémité de liaison (51) et d'une première extrémité libre (52) opposée à la première extrémité de liaison ; la première extrémité de liaison se situant d'un côté de la première coque adjacent à la base d'arbres rotatifs, et la première extrémité libre se situant d'un côté de la première coque distant de la base d'arbres rotatifs ; et
la deuxième coque étant pourvue d'une deuxième extrémité de liaison (61) et d'une deuxième extrémité libre (62) opposée à la deuxième extrémité de liaison ; la deuxième extrémité de liaison se situant d'un côté de la deuxième coque adjacent à la base d'arbres rotatifs, et la deuxième extrémité libre se situant d'un côté de la deuxième coque distant de la base d'arbres rotatifs.

10. Ensemble pliable (200) selon la revendication 8,
le mécanisme à deux arbres rotatifs comprenant deux premiers éléments rotatifs opposés l'un à l'autre, et deux deuxièmes éléments rotatifs opposés l'un à l'autre ;
les deux premiers éléments rotatifs étant liés rotatifs respectivement à deux extrémités de la base d'arbres rotatifs, et les extrémités des deux premiers éléments rotatifs distantes de la base d'arbres rotatifs étant liées à la première extrémité de liaison ; et
les deux deuxièmes éléments rotatifs étant liés rotatifs respectivement aux deux extrémités de la base d'arbres rotatifs, et les extrémités des deux deuxièmes éléments rotatifs distantes de la base d'arbres rotatifs étant liées à la deuxième extrémité de liaison.

11. Dispositif électronique (300), comprenant l'ensemble pliable (200) selon l'une quelconque des revendications 1 à 10.

12. Dispositif électronique (300) selon la revendication 11, comprenant en outre un écran d'affichage souple (70),
l'écran d'affichage souple comprenant une première partie d'affichage (71), une deuxième partie d'affichage (72) opposée à la première partie d'affichage, et une partie d'affichage flexible (73) solidarisée à la première partie d'affichage et à la deuxième partie d'affichage ; et
la première partie d'affichage étant fixée à une première coque, la deuxième partie d'affichage étant fixée à une deuxième coque, la première coque étant configurée pour effectuer une rotation par rapport à la deuxième coque au moyen du mécanisme à deux arbres rotatifs, afin d'amener la partie d'affichage flexible à fléchir.

13. Dispositif électronique (300) selon la revendication 12,
la première partie d'affichage étant fixée entre une première extrémité de liaison et une première extrémité libre, et la première partie d'affichage recouvrant un premier espace d'accueil (53) de la première coque ;
la deuxième partie d'affichage étant fixée entre une deuxième extrémité de liaison et une deuxième extrémité libre, et la deuxième partie d'affichage recouvrant un deuxième espace d'accueil (63) de la deuxième coque ;
la partie d'affichage flexible étant fixée entre la première partie d'affichage et la deuxième partie d'affichage, et la partie d'affichage flexible étant agencée à l'opposé de la base d'arbres rotatifs ; et
la première coque et la deuxième coque étant configurées pour effectuer une rotation synchrone par rapport à la base d'arbres rotatifs au moyen de la base à deux arbres rotatifs, afin d'amener la première partie d'affichage à se déplier ou à se plier par rapport à la deuxième partie d'affichage et, ce faisant, d'amener la partie d'affichage flexible à se déplier ou à fléchir.
